# EUROPÄISCHE PATENTSCHRIFT

(11) **EP 2 045 454 B1**
(45) Veröffentlichungstag und Bekanntmachung des Hinweises auf die Patenterteilung: **04.09.2019**
(21) Anmeldenummer: 08011658.5
(22) Anmeldetag: 27.06.2008
(51) Int. Cl.: F02C 6/12, F02B 37/013

(54) **BEFESTIGUNGSVORRICHTUNG FÜR EIN ZWEISTUFIGES AUFLADESYSTEM**
MOUNTING DEVICE FOR A TWO-STAGE CHARGING SYSTEM
DISPOSITIF DE FIXATION POUR UN SYSTÈME DE CHARGE À DEUX NIVEAUX

(30) Priorität: 02.10.2007 DE 102007047198
(43) Veröffentlichungstag der Anmeldung: 08.04.2009
(73) Patentinhaber: MAN Truck & Bus SE, 80995 München (DE)
(72) Erfinder: Möller, Heribert, 91623 Sachsen bei Ansbach (DE); Mösel, Sebastian, 90453 Nürnberg (DE)
(74) Vertreter: Kotitschke, Bernd

(56) Entgegenhaltungen:
- WO-A1-93/24735
- DE-A1- 10 122 406
- DE-A1- 19 925 684
- JP-U- H04 117 151

## Beschreibung

Die Erfindung betrifft eine Befestigungsvorrichtung für ein zweistufiges Aufladesystem gemäß dem Oberbegriff des Anspruchs 1.

Zweistufige Aufladesysteme für Verbrennungsmotoren sind grundsätzlich bekannt. Zweistufige Aufladesysteme weisen zwei in Reihe geschaltete Aufladevorrichtungen auf, die in der Regel als Abgasturbolader ausgebildet sind. Die Abgasturbolader weisen jeweils ein in einem Verdichtergehäuse angeordnetes Verdichterrad und ein in einem Turbinengehäuse angeordnetes Turbinenrad auf. Das Turbinenrad und das Verdichterrad sind über eine Welle fest miteinander verbunden, wobei die Welle in einem Lagerbauteil drehbar gelagert ist. Die Befestigung der Abgasturbolader erfolgt über die Turbinengehäuse, die bei der Montage des zweistufigen Aufladesystems jeweils mit einem Verbrennungsmotorbauteil verbunden werden. Nachteilig ist, dass die Turbinengehäuse sowohl mechanisch als auch thermisch hoch belastet sind und die auftretenden mechanischen und thermischen Belastungen zu einem mechanischen Bruch der Turbinengehäuse führen können.

Aus der WO 93/24735 A1 ist ein Trägergehäuse zur Befestigung der Abgasturbolader einer Brennkraftmaschine bekannt. Das geschlossene Trägergehäuse weist zwei symmetrische Gehäuseteile auf, die aneinander befestigt sind.

Der Erfindung liegt daher die Aufgabe zugrunde, eine Befestigungsvorrichtung für ein zweistufiges Aufladesystem bereitzustellen, die eine einfache und zuverlässige Befestigung des zweistufigen Aufladesystems ermöglicht.

Diese Aufgabe ist erfindungsgemäß gelöst durch eine Befestigungsvorrichtung mit den im Anspruch 1 angegebenen Merkmalen. Erfindungsgemäß wurde erkannt, dass durch das örtliche Trennen der mechanischen und der thermischen Belastungen eine zuverlässige Befestigung des zweistufigen Aufladesystems möglich ist. Das örtliche Trennen der mechanischen und thermischen Belastungen erfolgt mittels des einteilig mit den Lagerbauteilen ausgebildeten Verbindungsbauteils. Die thermischen Belastungen werden von den Aufladevorrichtungen verursacht. Dadurch, dass die Aufladevorrichtungen nicht unmittelbar an einem Verbrennungsmotorbauteil befestig sind, sondern lediglich mittelbar über das Verbindungsbauteil, können sich die Aufladevorrichtungen frei ausdehnen, so dass keine Wärmespannungen entstehen können. Das an einem Verbrennungsmotorbauteil befestigbare Verbindungsbauteil ist thermisch weitgehend unbelastet, so dass an der mechanischen Befestigungsstelle zu dem Verbrennungsmotorbauteil keine zusätzlichen thermischen Belastungen auftreten. Durch das örtliche Trennen der mechanischen und der thermischen Belastungen mittels des Verbindungsbauteils ist somit eine einfache und zuverlässige Befestigung eines zweistufigen Aufladesystems an einem Verbrennungsmotorbauteil möglich.

Eine stegartige Ausbildung des Verbindungsbauteils ist robust und materialoptimiert.

Eine Ausbildung des Verbindungsbauteils nach Anspruch 2 ermöglicht eine Befestigung eines zweistufigen Aufladesystems nahe dessen Schwerpunktes, so dass eine Momentenbildung bei Schwingungen auf ein Minimum reduzierbar ist.

Eine Ausbildung des Befestigungsabschnitts nach Anspruch 3 ermöglicht eine schnelle und einfache Montage eines vormontierten zweistufigen Aufladesystems mittels weniger Befestigungsmittel an einem Fließband.

Eine Ausbildung des Schmiermittelzuführkanals nach Anspruch 4 ermöglicht ein einfaches Zuführen von Schmiermittel zu den Lagerbauteilen.

Eine Ausbildung der Zuführöffnungen nach Anspruch 5 ermöglicht eine ausreichende Versorgung mit Schmiermittel entlang der gesamten Lagerungsbohrungen.

Eine Zulauföffnung nach Anspruch 6 führt dazu, dass lediglich eine Schmiermittelschnittstelle vorhanden und somit lediglich eine Schmiermitteldichtstelle zum Bereitstellen von Schmiermitteln in dem Schmiermittelzuführkanal abzudichten ist. Besonders vorteilhaft ist, wenn das Verbindungsbauteil gemäß Anspruch 3 ausgebildet ist, da durch die reduzierte Momentenbildung die Befestigungsanforderungen an eine Zulaufleitung an der Schmiermittelschnittstelle reduzierbar sind.

Eine Ausbildung des Schmiermittelabführkanals nach Anspruch 7 ermöglicht ein einfaches Abführen von Schmiermitteln aus den Lagerbauteilen.

Eine Ablauföffnung nach Anspruch 8 führt dazu, dass lediglich eine Schmiermittelschnittstelle vorhanden und somit lediglich eine Schmiermitteldichtstelle zum Entfernen von Schmiermittel aus dem Schmiermittelabführkanal abzudichten ist. Besonders vorteilhaft ist, wenn das Verbindungsbauteil gemäß Anspruch 3 ausgebildet ist, da durch die reduzierte Momentenbildung die Befestigungsanforderungen an eine Ablaufleitung an der Schmiermittelschnittstelle reduzierbar sind.

Ein zweistufiges Aufladesystem nach Anspruch 9 weist entsprechende Vorteile wie die erfindungsgemäße Befestigungsvorrichtung auf.

Weitere Vorteile und Einzelheiten der Erfindung ergeben sich aus der nachfolgenden Beschreibung eines Ausführungsbeispiels anhand der Zeichnung. Es zeigen:

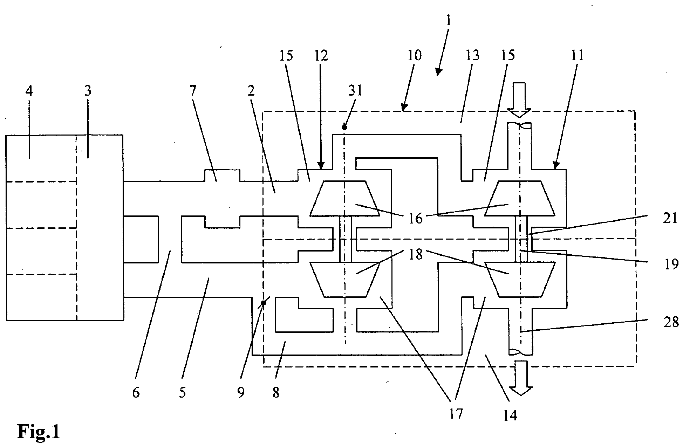

- Fig. 1: eine Prinzipdarstellung eines zweistufigen Aufladesystems,

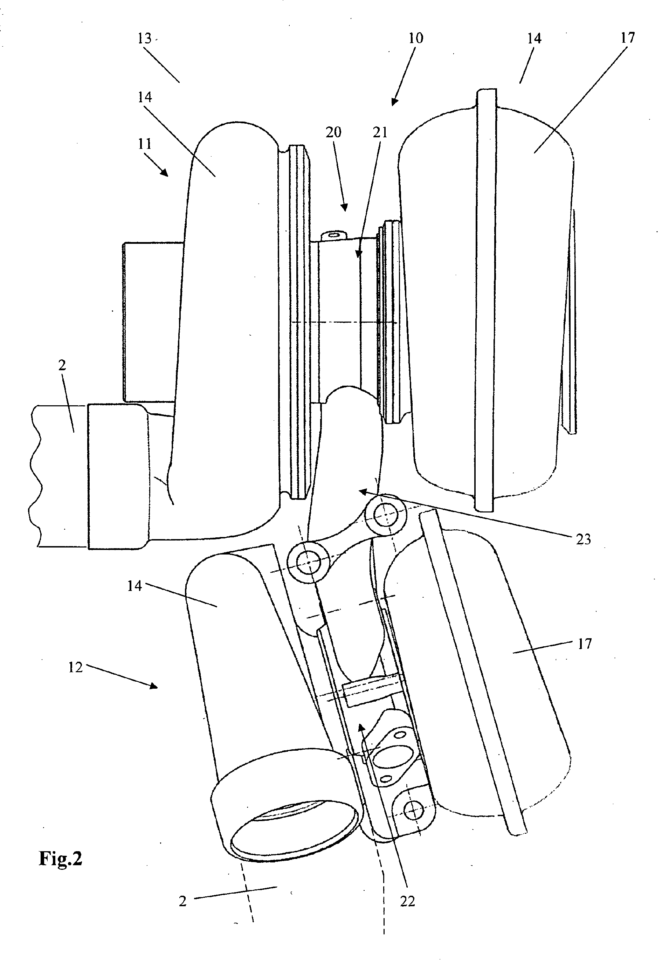

- Fig. 2: eine perspektivische Ansicht des zweistufigen Aufladesystems gemäß Fig. 1,

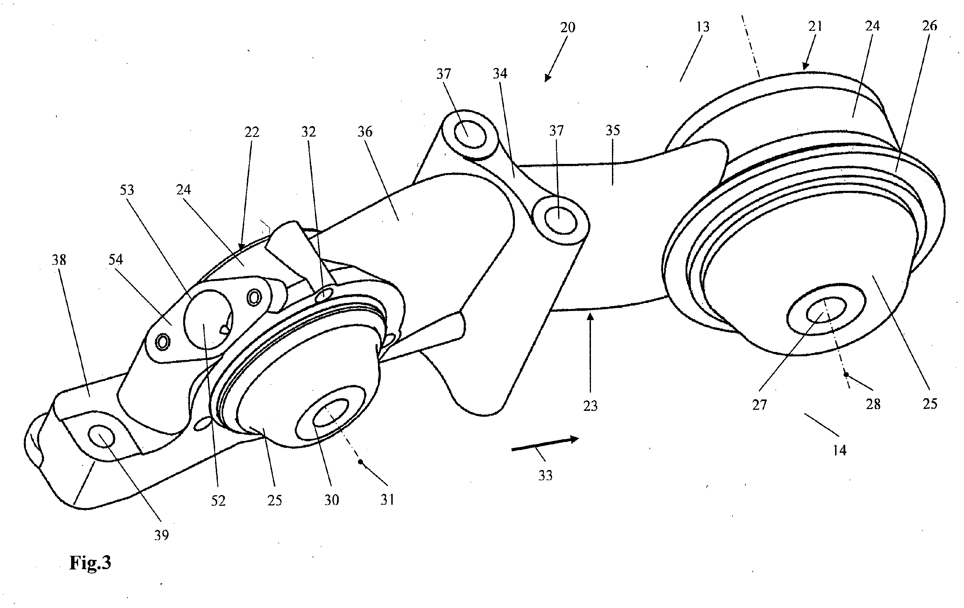

- Fig. 3: eine perspektivische Ansicht einer Befestigungsvorrichtung des Auflade-systems gemäß Fig. 2,

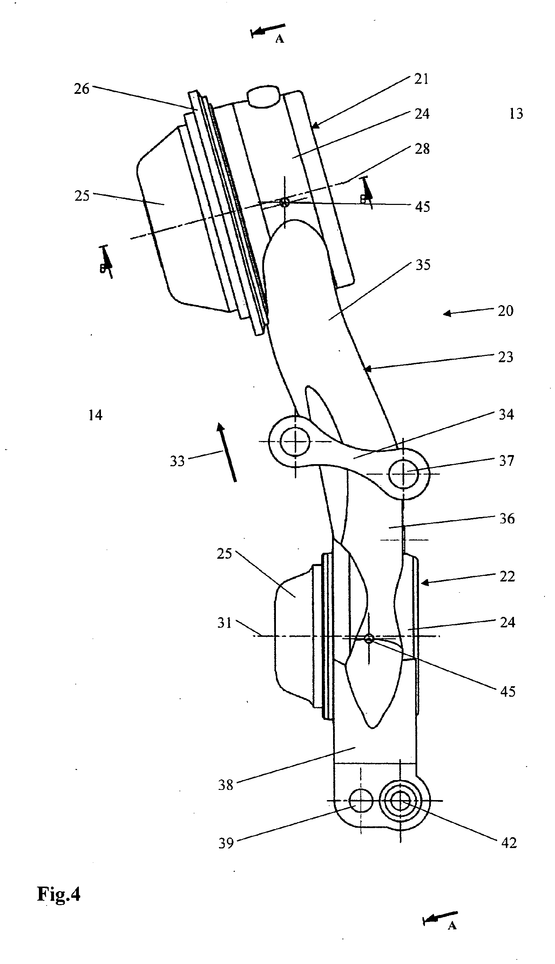

- Fig. 4: eine Draufsicht auf die Befestigungsvorrichtung gemäß Fig. 3,

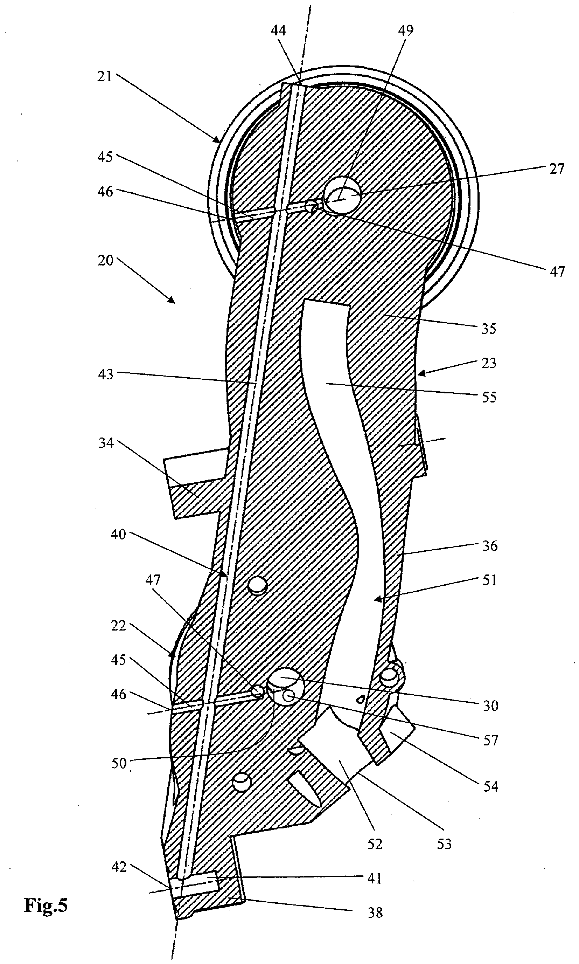

- Fig. 5: eine Schnittdarstellung durch die Befestigungsvorrichtung entlang der Schnittlinie A-A in Fig. 4,

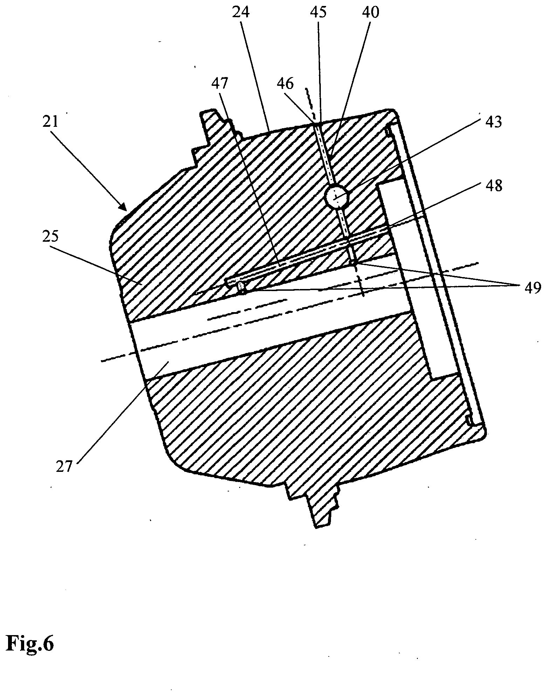

- Fig. 6: eine Schnittdarstellung durch die Befestigungsvorrichtung entlang der Schnittlinie B-B in Fig. 4,

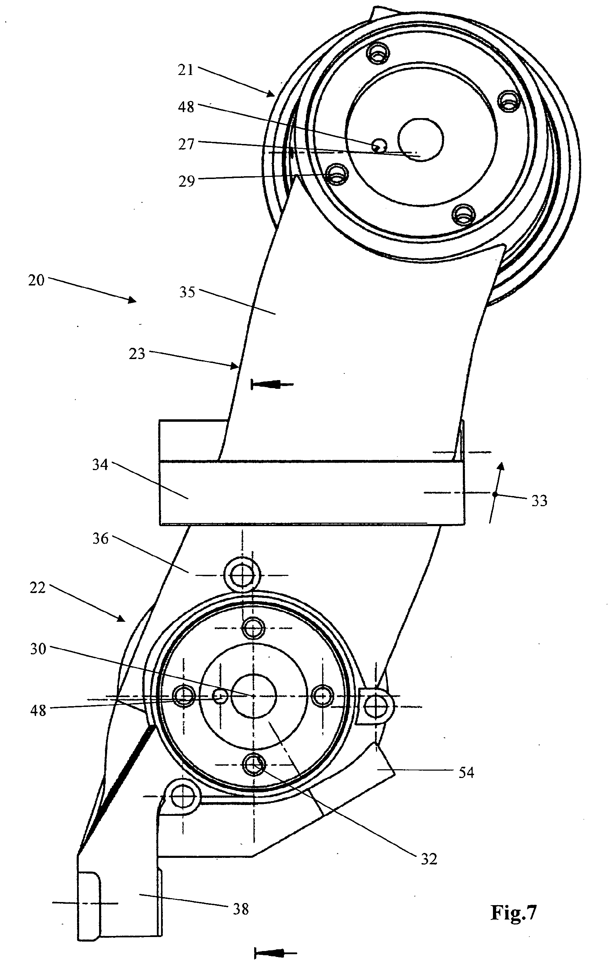

- Fig. 7: eine Seitenansicht der Befestigungsvorrichtung gemäß Fig. 3, und

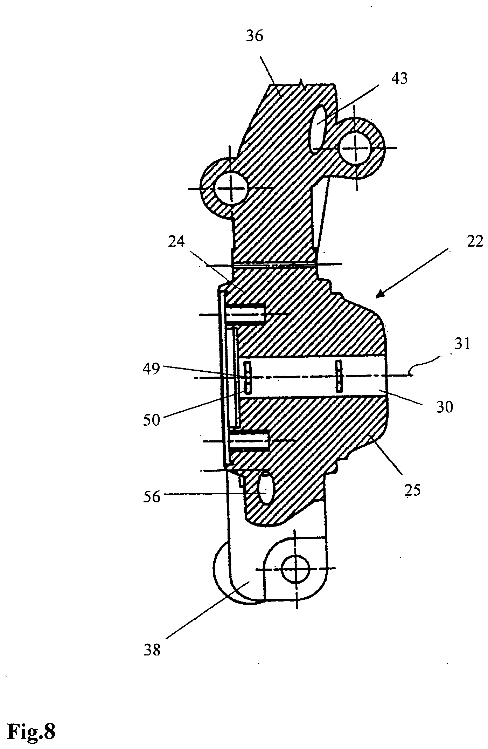

- Fig. 8: eine Schnittdarstellung durch die Befestigungsvorrichtung entlang der Schnittlinie C-C in Fig. 7.

Ein Verbrennungsmotor 1 umfasst eine Frischluftzuführleitung 2, einen Motorblock 3 mit Zylinder 4, eine Abgasabführleitung 5, eine Abgasrückführleitung 6, einen Ladeluftkühler 7, eine Bypassleitung 8 mit einem Bypassventil 9 und ein zweistufiges Aufladesystem 10.

Das zweistufige Aufladesystem 10 weist eine erste Aufladevorrichtung 11 und eine in Reihe zu dieser geschalteten zweite Aufladevorrichtung 12 auf, die eine Verdichterseite 13 und eine Turbinenseite 14 ausbilden. Die Aufladevorrichtungen 11, 12 sind als Abgasturbolader ausgebildet und weisen jeweils ein in einem Verdichtergehäuse 15 angeordnetes Verdichterrad 16 und ein in einem Turbinengehäuse 17 angeordnetes Turbinenrad 18 auf. Die Verdichterräder 16 sind über jeweilige Wellen 19 mit den zugehörigen Turbinenrädern 18 fest verbunden. Die Aufladevorrichtungen 11, 12 dienen zum Verdichten von Frischluft, wobei die erste Aufladevorrichtung 11 eine Niederdruckstufe und die zweite Aufladevorrichtung 12 eine Hochdruckstufe ausbildet.

Die Frischluftzuführleitung 2 mündet in das Verdichtergehäuse 15 der ersten Aufladevorrichtung 11, von dort in das Verdichtergehäuse 15 der zweiten Aufladevorrichtung 12, von dort in den Ladeluftkühler 7 und von dort in die einzelnen Zylinder 4. Die Abgasabführleitung 5 mündet ausgehend von den einzelnen Zylindern 4 in das Turbinengehäuse 17 der zweiten Aufladevorrichtung 12, von dort in das Turbinengehäuse 17 der ersten Aufladevorrichtung 11 und von dort über eine nicht dargestellte Schalldämpfervorrichtung in die Umgebung. Zwischen der Abgasabführleitung 5 und der Frischluftzuführleitung 2 verläuft die Abgasrückführleitung 6, die zwischen dem Ladeluftkühler 7 und den Zylindern 4 in die Frischluftzuführleitung 2 mündet. Die Bypassleitung 8 überbrückt auf der Turbinenseite 14 die zweite Aufladevorrichtung 12 und ist mittels des Bypassventils 9 verschließbar.

Das zweistufige Aufladesystem 10 umfasst eine Befestigungsvorrichtung 20 zur Befestigung der Aufladevorrichtungen 11, 12 an einem Verbrennungsmotorbauteil, wie beispielsweise dem Motorblock 3. Die Befestigungsvorrichtung 20 weist ein erstes Lagerbauteil 21 zur Lagerung des ersten Aufladevorrichtung 11 und ein zweites Lagerbauteil 22 zur Lagerung der zweiten Aufladevorrichtung 12 sowie ein Verbindungsbauteil 23 auf, das einteilig mit den Lagerbauteilen 21, 22 ausgebildet ist und diese verbindet. Das Verbindungsbauteil 23 ist derart ausgebildet, dass es an einem Verbrennungsmotorbauteil befestigbar ist.

Das erste Lagerbauteil 21 weist einen zylinderförmigen ersten Lagerabschnitt 24 und einen daran angeformten kegelförmigen zweiten Lagerabschnitt 25 auf. zwischen den Lagerabschnitten 24, 25 ist ein Ringbund 26 ausgebildet. Mittig in dem ersten Lagerbauteil 21 ist eine erste Lagerungsbohrung 27 ausgebildet, durch die die Welle 19 der ersten Aufladevorrichtung 11 geführt ist, so dass diese um eine erste Drehachse 28 drehbar ist. Der erste Lagerabschnitt 24 weist an einer dem zweiten Lagerabschnitt 25 abgewandten Seite mehrere Gewindebohrungen 29 auf. Das Verdichtergehäuse 15 der ersten Aufladevorrichtung 11 ist mittels Befestigungsmitteln in den Gewindebohrungen 29 festgelegt. Das Turbinengehäuse 17 der ersten Aufladevorrichtung 11 ist mittels einer Schelle an dem Ringbund 26 befestigt.

Das zweite Lagerbauteil 22 ist im Wesentlichen entsprechend dem ersten Lagerbauteil 21 ausgebildet und umfasst einen entsprechenden ersten Lagerabschnitt 24 und einen entsprechenden zweiten Lagerabschnitt 25. Ferner weist das zweite Lagerbauteil 22 eine zweite Lagerungsbohrung 30 auf, durch die die Welle 19 der zweiten Aufladevorrichtung 12 geführt ist, so dass diese um eine zweite Drehachse 31 drehbar ist. Der erste Lagerabschnitt 24 des zweiten Lagerbauteils 22 weist beidseitig mehrere Gewindebohrungen 32 zur Befestigung des Verdichtergehäuses 15 und des Turbinengehäuses 17 auf.

Das Verbindungsbauteil 23 erstreckt sich stegartig in einer Verbindungsrichtung 33 zwischen den ersten Lagerabschnitten 24 der Lagerbauteile 21, 22. Die Verbindungsrichtung 33 verläuft quer zu den Drehachsen 28, 31. Das Verbindungsbauteil 23 weist einen Befestigungsabschnitt 34, einen ersten Verbindungsabschnitt 35 und einen zweiten Verbindungsabschnitt 36 auf. Der Befestigungsabschnitt 34 ist im Wesentlichen mittig zwischen den Lagerbauteilen 21, 22 angeordnet. Beidseitig des Befestigungsabschnitts 34 sind die Verbindungsabschnitte 35, 36 angeordnet, wobei der erste Verbindungsabschnitt 35 den Befestigungsabschnitt 34 mit dem ersten Lagerbauteil 21 und der zweite Verbindungsabschnitt 36 den Befestigungsabschnitt 34 mit dem zweiten Lagerbauteil 22 verbindet. Der Befestigungsabschnitt 34 ist plattenartig ausgebildet, wobei in dem Befestigungsabschnitt 34 zwei Befestigungsbohrungen 37 zum Durchführen von Befestigungsmitteln ausgebildet sind. Die Befestigungsbohrungen 37 verlaufen parallel zueinander und im Wesentlichen quer zu den Drehachsen 28, 31 und der Verbindungsrichtung 33.

Die Befestigungsvorrichtung 20 weist weiterhin einen Befestigungsfortsatz 38 auf, der einteilig mit dem zweiten Lagerbauteil 22 ausgebildet und an den ersten Lagerabschnitt 24 an einer dem Verbindungsbauteil 23 gegenüberliegenden Seite angeformt ist. Der Befestigungsfortsatz 38 ist im Wesentlichen plattenförmig ausgebildet und weist eine weitere Befestigungsbohrung 39 auf, die parallel zu den Befestigungsbohrungen 37 des Befestigungsabschnitts 34 verläuft.

Zum Zuführen von Schmiermittel zu den Lagerbauteilen 21, 22 weist die Befestigungsvorrichtung 20 einen Schmiermittelzuführkanal 40 auf. Der Schmiermittelzuführkanal 40 umfasst einen sacklochförmigen Zulauf 41, der in dem Befestigungsfortsatz 38 angeordnet ist und eine Zulauföffnung 42 ausbildet.

Ein erster Zuführkanalabschnitt 43 erstreckt sich ausgehend von dem Zulauf 41 im Wesentlichen quer zu diesem und entlang der Verbindungsrichtung 33 durch die gesamte Befestigungsvorrichtung 20, wobei der erste Zuführkanalabschnitt 43 die Lagerungsbohrung 27, 30 passiert. Der erste Zuführkanalabschnitt 43 bildet im Bereich des ersten Lagerbauteils 21 eine erste Fertigungsöffnung 44 aus. Die erste Fertigungsöffnung 44 ist durch das Herstellen des ersten Zuführkanalabschnittes 43 bedingt und mittels eines nicht dargestellten Verschlussbauteils, beispielsweise eines Stopfens, verschließbar. Der erste Zuführkanalabschnitt 43 ist somit teilweise in dem Verbindungsbauteil 23 ausgebildet.

Zweite Zuführkanalabschnitte 45 des Schmiermittelzuführkanals 40 verlaufen jeweils radial zu den Lagerungsbohrungen 27, 30 und kreuzen den ersten Zuführkanalabschnitt 43. Die zweiten Zuführkanalabschnitte 45 bilden jeweils eine zweite Fertigungsöffnung 46 aus. Die zweiten Zuführkanalabschnitte 45 münden nicht in die Lagerungsbohrungen 27, 30, sondern enden vor diesen sacklochartig. Die zweiten Fertigungsöffnungen 46 sind durch die Herstellung der zweiten Zuführkanalabschnitte 45 bedingt und durch nicht näher dargestellte Verschlussmittel verschließbar.

Dritte Zuführkanalabschnitte 47 des Schmiermittelzuführkanals 40 verlaufen im Wesentlichen entlang der Drehachsen 28, 31 und kreuzen die jeweils zugehörigen zweiten Zuführkanalabschnitte 45 im Bereich zwischen dem ersten Zuführkanalabschnitt 43 und den zugehörigen Lagerungsbohrungen 27, 30. Die dritten Zuführkanalabschnitte 47 sind sacklochartig ausgebildet und bilden an einer den zweiten Lagerabschnitten 25 abgewandten Seite der ersten Lagerabschnitte 24 dritte Fertigungsöffnungen 48 aus. Die dritten Fertigungsöffnungen 48 sind durch die Herstellung der dritten Zuführkanalabschnitte 47 bedingt und mittels nicht dargestellter Verschlussmittel verschließbar.

Vierte Zuführkanalabschnitte 49 verlaufen jeweils radial zu den Lagerungsbohrungen 27, 30 und verbinden die Lagerungsbohrungen 27, 30 mit den jeweils zugehörigen dritten Zuführkanalabschnitten 47. Die vierten Zuführkanalabschnitte 49 sind jeweils entlang der zugehörigen Lagerungsbohrung 27, 30 beabstandet voneinander angeordnet und bilden mehrere entlang der Lagerungsbohrungen 27, 30 angeordnete Zuführöffnungen 50 aus. Die vierten Zuführkanalabschnitte 49 sind sichelartig ausgebildet und münden schlitzartig in die Lagerungsbohrungen 27, 30.

Zum Abführen von Schmiermittel aus den Lagerbauteilen 21, 22 weist die Befestigungsvorrichtung 20 einen Schmiermittelabführkanal 51 auf. Der Schmiermittelabführkanal 51 umfasst einen sacklochartigen Ablauf 52, der radial zu der zweiten Lagerungsbohrung 30 verläuft und im Bereich des ersten Lagerabschnitts 24 des zweiten Lagerbauteils 22 eine Ablauföffnung 53 zum Entfernen von Schmiermittel aus dem Schmiermittelabführkanal 51 ausbildet. Zum Befestigen einer nicht näher dargestellten Ablaufleitung ist um die Ablauföffnung 53 ein Befestigungsflansch 54 an das zweite Lagerbauteil 22 angeformt. Ein erster Abführkanalabschnitt 55 erstreckt sich ausgehend von dem Ablauf 52 zu der ersten Lagerungsbohrung 27 und mündet mittel in diese. Der erste Abführkanalabschnitt 55 ist somit teilweise in dem Verbindungsbauteil 23 ausgebildet und erstreckt sich im Wesentlichen entlang der Verbindungsrichtung 33. Ein zweiter Abführkanalabschnitt 56 erstreckt sich ausgehend von dem Ablauf 52 zu der zweiten Lagerungsbohrung 30 und mündet mittig in diese. Dadurch, dass die Abführkanalabschnitte 55, 56 in die Lagerungsbohrungen 27, 30 münden, werden Abführöffnungen 57 zum Abführen von Schmiermittel aus den Lagerbauteilen 21, 22 ausgebildet.

- Das zweistufige Aufladesystem 10 wird mittels der Befestigungsvorrichtung 20 an einem Verbrennungsmotorbauteil, beispielsweise dem Motorblock 3, befestigt. Die Befestigung erfolgt mittels Befestigungsmitteln, die durch die Befestigungsbohrungen 37 des Befestigungsabschnitts 34 geführt und mit dem Verbrennungsmotorbauteil verbunden werden. Zusätzlich kann eine Befestigung des zweistufigen Aufladesystems 10 an dem Befestigungsfortsatz 38 erfolgen. Hierzu wird ein Befestigungsmittel durch die Befestigungsbohrung 39 geführt und mit dem Verbrennungsmotorbauteil verbunden. Dadurch, dass die Befestigung der Aufladevorrichtungen 11, 12 mittelbar über die Befestigungsvorrichtung 20 erfolgt, sind die Aufladevorrichtungen 11, 12 zwangfrei befestigt, so dass die in den Aufladevorrichtungen 11, 12 auftretenden thermischen Belastungen nicht zu Wärmespannungen führen können. Die Aufladevorrichtungen 11, 12 können sich beim Auftreten von thermischen Belastungen im Wesentlichen frei ausdehnen. Dadurch, dass die Befestigung des zweistufigen Aufladesystems 10 beanstandet von den Aufladevorrichtungen 11, 12 erfolgt, wird eine örtliche Trennung der thermischen Belastungen und der mechanischen Belastungen erzielt. Die Befestigungsvorrichtung 20 führt somit zu einer einfachen und zuverlässigen Befestigung des zweistufigen Aufladesystems 10. Dadurch, dass die thermischen und mechanischen Belastungen örtlich getrennt sind, ist im Wesentlichen keine örtliche Überlagerung von thermischen und mechanischen Belastungen möglich, so dass das Material der Aufladevorrichtungen 11, 12 und der Befestigungsvorrichtung 20 im Vergleich zu herkömmlichen Aufladesystemen geringeren Anforderungen genügen muss.

Durch die einteilige Ausbildung der Befestigungsvorrichtung 20 können der Schmiermittelzuführkanal 40 und der Schmiermittelabführkanal 51 integriert ausgebildet werden, so dass die Befestigungsvorrichtung 20 keine abzudichtenden Dichtstellen aufweist. Dadurch, dass der Schmiermittel Zuführkanal 40 genau eine Zulauföffnung 42 und der Schmiermittelabführkanal 51 genau eine Ablauföffnung 53 aufweisen, müssen zum Bereitstellen und Entfernen von Schmiermittel jeweils nur eine Schmiermitteldichtstelle abgedichtet werden. Die Abdichtung erfolgt mittels handelsüblicher O-Ringe, die zwischen dem Zulauf 41 und einer Zulaufleitung und dem Ablauf 53 und einer Ablaufleitung angeordnet sind.

Durch das Vorsehen der Befestigungsvorrichtung 20 kann das zweistufige Aufladesystem 10 vollständig vormontiert werden, so dass eine schnelle und einfache Montage des zweistufigen Aufladesystems 10 an ein Verbrennungsmotorbauteil am Fließband möglich ist. Die Befestigung des zweistufigen Aufladesystems 10 erfolgt schnell und einfach mittels weniger Befestigungsmittel, die durch die Befestigungsbohrungen 37, 39 geführt werden und mit dem Verbrennungsmotorbauteil verbunden werden. Dadurch, dass der Befestigungsabschnitt 34 mittig zwischen den Lagerbauteilen 21, 22 angeordnet ist, wird das zweistufige Aufladesystem 10 im Wesentlichen nahe seines Schwerpunktes montiert, so dass eine Momentenbildung bei Schwingungen, beispielsweise bei Verbrennungsmotorvibrationen, auf ein Minimum reduziert wird. Ferner werden die Befestigungsanforderungen an eine Zulaufleitung und eine Ablaufleitung, die an die Befestigungsvorrichtung 20 angeschlossen sind, deutlich reduziert.

## Patentansprüche

1. Befestigungsvorrichtung (20) für ein zweistufiges Aufladesystem, mit
a. einem ersten Lagerbauteil (21) zur Lagerung einer ersten Aufladevorrichtung (11), und
b. einem zweiten Lagerbauteil (22) zur Lagerung einer zweiten Aufladevorrichtung (12),
mit einem Verbindungsbauteil (23) zur Verbindung der Lagerbauteile (21, 22), wobei das Verbindungsbauteil (23) einteilig mit den Lagerbauteilen (21, 22) ausgebildet und an einem Verbrennungsmotorbauteil befestigbar ist,
**dadurch gekennzeichnet, dass**
das Verbindungsbauteil (23) sich stegartig in einer Verbindungsrichtung (33) erstreckt.

2. Befestigungsvorrichtung nach Anspruch 1, **dadurch gekennzeichnet, dass** das Verbindungsbauteil (23) einen im Wesentlichen mittig zwischen den Lagerbauteilen (21, 22) angeordneten Befestigungsabschnitt (34) und beidseitig des Befestigungsabschnittes (34) angeordnete Verbindungsabschnitte (35, 36) aufweist.

3. Befestigungsvorrichtung nach Anspruch 1, **dadurch gekennzeichnet, dass** in dem Befestigungsabschnitt (34) mindestens eine Befestigungsbohrung (37) zum Durchführen eines Befestigungsmittels ausgebildet ist.

4. Befestigungsvorrichtung nach einem der Ansprüche 1 bis 3, **dadurch gekennzeichnet, dass** ein zumindest teilweise in dem Verbindungsbauteil (23) ausgebildeter Schmiermittelzuführkanal (40) zum Zuführen von Schmiermittel zu den Lagerbauteilen (21, 22) vorgesehen ist.

5. Befestigungsvorrichtung nach Anspruch 4, **dadurch gekennzeichnet, dass** der Schmiermittelzuführkanal (4) mehrere entlang von Lagerungsbohrungen (27, 30) der Lagerbauteile (21, 22) angeordnete Zuführöffnungen (50) ausbildet.

6. Befestigungsvorrichtung nach Anspruch 4 oder 5, **dadurch gekennzeichnet, dass** der Schmiermittelzuführkanal (40) genau eine Zulauföffnung (42) zum Bereitstellen von Schmiermittel in dem Schmiermittelzuführkanal (40) aufweist.

7. Befestigungsvorrichtung nach einem der Ansprüche 1 bis 6, **dadurch gekennzeichnet, dass** ein zumindest teilweise in dem Verbindungsbauteil (23) ausgebildeter Schmiermittelabführkanal (51) zum Abführen von Schmiermittel aus den Lagerbauteilen (21, 22) vorgesehen ist, wobei der Schmiermittelabführkanal (51) mehrere Abführöffnungen (57) ausbildet.

8. Befestigungsvorrichtung nach Anspruch 7, **dadurch gekennzeichnet, dass** der Schmiermittelabführkanal (51) genau eine Ablauföffnung (53) zum Entfernen von Schmiermittel aus dem Schmiermittelabführkanal (51) aufweist.

9. Zweistufiges Aufladesystem für einen Verbrennungsmotor, mit
a) einer ersten Aufladevorrichtung (11) zum Verdichten von Luft,
b) einer in Reihe zu der ersten Aufladevorrichtung (11) angeordneten zweiten Aufladevorrichtung (12) zum weiteren Verdichten von Luft, und
c) einer Befestigungsvorrichtung (20) nach einem der Ansprüche 1 bis 8, wobei die erste Aufladevorrichtung (11) an dem ersten Lagerbauteil (21) und die zweite Aufladevorrichtung (12) an dem zweiten Lagerbauteil (22) gelagert ist.

## Claims

1. Mounting device (20) for a two-stage charging system, comprising
a. a first bearing component (21) for supporting a first charging device (11), and
b. a second bearing component (22) for supporting a second charging device (12),
having a connecting component (23) for connecting the bearing components (21, 22), the connecting component (23) being formed in one piece with the bearing components (21, 22) and being attachable to an internal combustion engine component, **characterized in that**
the connecting component (23) extends in the manner of a web in a connecting direction (33).

2. Mounting device according to Claim 1, **characterized in that** the connecting component (23) has a mounting section (34) arranged substantially centrally between the bearing components (21, 22), and connecting sections (35, 36) arranged on both sides of the mounting section (34) .

3. Mounting device according to Claim 1, **characterized in that** at least one mounting hole (37) for a mounting means to be led through is formed in the mounting section (34).

4. Mounting device according to one of Claims 1 to 3, **characterized in that** a lubricant feed channel (40) for feeding lubricant to the bearing components (21, 22) which is provided is at least partly formed in the connecting component (23).

5. Mounting device according to Claim 4, **characterized in that** the lubricant feed channel (4) forms a plurality of feed openings (50) arranged along bearing bores (27, 30) of the bearing components (21, 22).

6. Mounting device according to Claim 4 or 5, **characterized in that** the lubricant feed channel (40) has exactly one inlet opening (42) for providing lubricant in the lubricant feed channel (40) .

7. Mounting device according to one of Claims 1 to 6, **characterized in that** a lubricant discharge channel (51) for discharging lubricant from the bearing components (21, 22) which is provided is at least partly formed in the connecting component (23), wherein the lubricant discharge channel (51) forms a plurality of discharge openings (57).

8. Mounting device according to Claim 7, **characterized in that** the lubricant discharge channel (51) has exactly one outlet opening (53) for removing lubricant from the lubricant discharge channel (51).

9. Two-stage charging system for an internal combustion engine, comprising
a) a first charging device (11) for compressing air,
b) a second charging device (12) arranged in series with the first charging device (11) for further compressing air, and
c) a mounting device (20) according to one of Claims 1 to 8, wherein the first charging device (11) is mounted on the first bearing component (21) and the second charging device (12) is mounted on the second bearing component (22) .

## Revendications

1. Dispositif de fixation (20) pour un système de charge à deux niveaux, doté
a. d'un premier composant de palier (21) pour le logement d'un premier dispositif de charge (11), et
b. d'un deuxième composant de palier (22) pour le logement d'un deuxième dispositif de charge (12),
doté d'un composant de raccordement (23) pour le raccordement des composants de palier (21, 22), dans lequel le composant de raccordement (23) est réalisé d'une pièce avec les composants de palier (21, 22) et peut être fixé à un composant de moteur à combustion, **caractérisé en ce que** le composant de raccordement (23) s'étend comme une tige dans une direction de raccordement (33) .

2. Dispositif de fixation selon la revendication 1, **caractérisé en ce que** le composant de raccordement (23) comporte une section de fixation (34) agencée essentiellement au milieu entre les composants de palier (21, 22) et des sections de raccordement (35, 36) agencées des deux côtés de la section de fixation (34).

3. Dispositif de fixation selon la revendication 1, **caractérisé en ce qu'**au moins un alésage de fixation (37) est réalisé dans la section de fixation (34) pour la tenue d'un moyen de fixation.

4. Dispositif de fixation selon l'une des revendications 1 à 3, **caractérisé en ce qu'**un canal d'alimentation en lubrifiant (40) réalisé au moins partiellement dans le composant de raccordement (23) est prévu pour amener du lubrifiant aux composants de palier (21, 22).

5. Dispositif de fixation selon la revendication 4, **caractérisé en ce que** le canal d'alimentation en lubrifiant (4) réalise plusieurs ouvertures de passage (50) agencées le long d'alésages de logement (27, 30) des composants de palier (21, 22).

6. Dispositif de fixation selon la revendication 4 ou 5, **caractérisé en ce que** le canal d'alimentation en lubrifiant (40) comporte exactement une ouverture d'entrée (42) pour la fourniture de lubrifiant dans le canal d'alimentation en lubrifiant (40).

7. Dispositif de fixation selon l'une des revendications 1 à 6, **caractérisé en ce qu'**un canal d'évacuation de lubrifiant (51) réalisé au moins partiellement dans le composant de raccordement (23) est prévu pour évacuer le lubrifiant hors des composants de palier (21, 22), dans lequel le canal d'évacuation de lubrifiant (51) réalise plusieurs ouvertures d'évacuation (57).

8. Dispositif de fixation selon la revendication 7, **caractérisé en ce que** le canal de passage de lubrifiant (51) comporte exactement une ouverture d'évacuation (53) pour l'élimination du lubrifiant hors du canal d'évacuation de lubrifiant (51).

9. Système de charge à deux niveaux pour un moteur à combustion, doté
a) d'un premier dispositif de charge (11) pour compression d'air,
b) d'un deuxième dispositif de charge (12) agencé en série par rapport au premier dispositif de charge (11) pour compression supplémentaire de l'air, et
c) d'un dispositif de fixation (20) selon l'une des revendications 1 à 8, dans lequel le premier dispositif de charge (11) est logé sur le premier composant de palier (21) et le deuxième dispositif de charge (12) est logé sur le deuxième composant de palier (22).
